Europäisches Patentamt

European Patent Office

Office européen des brevets

(19)

(11) Veröffentlichungsnummer: **0 129 220**
**B1**

(12) **EUROPÄISCHE PATENTSCHRIFT**

(45) Veröffentlichungstag der Patentschrift: **05.09.90**

(21) Anmeldenummer: **84106830.7**

(22) Anmeldetag: **14.06.84**

(60) Teilanmeldung **90100574.4** eingereicht am **14/06/84.**

(51) Int. Cl.⁵: **G 01 N 21/86,** G 01 N 35/00

(54) **Gerät zur Auswertung eines flachen Testträgers zur analytischen Bestimmung von Bestandteilen einer Körperflüssigkeit.**

(30) Priorität: **16.06.83 DE 3321785**

(43) Veröffentlichungstag der Anmeldung:
**27.12.84 Patentblatt 84/52**

(45) Bekanntmachung des Hinweises auf die Patenterteilung:
**05.09.90 Patentblatt 90/36**

(84) Benannte Vertragsstaaten:
**AT BE CH DE FR GB IT LI LU NL SE**

(56) Entgegenhaltungen:
**EP-A-0 037 484**
**US-A-4 141 044**

**IBM TECHNICAL DISCLOSURE BULLETIN, Band 17, Nr. 1, Juni 1974, Seiten 194-195, New York, US; C.E. JOHNSON: "Latch mechanism for perforate badge"**

(73) Patentinhaber: **BOEHRINGER MANNHEIM GMBH**
**Sandhofer Strasse 116**
**D-6800 Mannheim 31 (DE)**

(72) Erfinder: **Jäck, Thomas, Dipl.-Ing.**
**Pfalzstrasse 8**
**D-7541 Straubenhardt (DE)**
Erfinder: **Knoll, Dieter, Dr. rer.nat.**
**Wendelinsweg 4**
**D-6242 Kronberg (DE)**
Erfinder: **Meinecke, Dieter**
**Braustrasse 5**
**D-6800 Mannheim 31 (DE)**
Erfinder: **Pauli, Manfred**
**Kastanienweg 8**
**D-6830 Schwetzingen (DE)**
Erfinder: **V. Rijkevorsel, Rainer, Dipl.-Ing.**
**Freiburger Strasse 3**
**D-6831 Brühl (DE)**
Erfinder: **Schüssler, Rudolf**
**Oberlacher Strasse 20**
**D-6840 Lampertheim (DE)**

EP 0 129 220 B1

## Beschreibung

Die Erfindung betrifft ein Gerät zur Auswertung eines Testträgers zur analytischen Bestimmung von Bestandteilen einer Körperflüssigkeit mit einer Meßeinheit und einer Positioniereinrichtung, mittels welcher der Testträger dergestalt in eine Meßposition positioniert und festgehalten wird, daß sich sein Testfeld in einer betimmten Lage bezüglich der Meßeinheit befindet.

Zur Bestimmung von Bestandteilen von Körperflüssigkeiten, wie z.B. Blut oder Urin, werden in der klinischen Chemie zunehmend feste Testträger eingesetzt. Im Vergleich zu den klassischen Methoden, bei denen die Proben mit flüssigen Reagenzien gemischt wurden, zeichnen sich diese Verfahren insbesondere durch eine erheblich vereinfachte Durchführung aus. Die Testträger müssen im prinzip nur noch mit der Probe in Kontakt gebracht und dann in ein verhältnismäßig einfach aufgebautes Auswertegerät eingesetzt werden. Dadurch läßt sich ein hohes Maß an Zuverlässigkeit auch bei Bedienung durch wenig ausgebildetes Personal erreichen. Außerdem lassen sich derartige Geräte dezentral jeweils dort aufstellen, wo die Analyse gebraucht wird und ihr Ergebnis ist in kurzer Zeit problemlos verfügbar.

Testträger vergleichsweise einfacher Art sind seit vielen Jahren in Form von Teststreifen geläufig, bei denen die Reaktionsschicht enthaltenes Testfeld auf einem länglichen Kunststoffstreifen aufgebracht ist, dessen Stärke und Material so bemessen sind, daß er insgesamt flexibel ist. Seitdem es gelungen ist, die Farbreaktion auf den Testfeldern solcher Teststreifen mit einem hohen Grad an Genauigkeit mit der Konzentration des zu bestimmenden Bestandteils zu verknüpfen, werden die Teststreifen auch mit Hilfe entsprechender Geräte quantitativ ausgewertet. Dies geschieht in der Regel dadurch, daß mit einem Reflexionsphotometer das diffuse Reflexionsvermögen der Testfeldoberfläche nach der Reaktion gemessen wird.

Die Qualität und die Gebrauchseigenschaften des zur Auswertung verwendeten Geräts werden wesentlich durch die darin vorhandene Einrichtung zum Positionieren des Testfeldes relativ zur Meßeinheit des Gerätes bestimmt. Diese muß einerseits so gestaltet sein, daß der Testträger möglichst leicht und problemlos eingelegt und nach durchgeführter Messung wieder entnommen werden kann. Die Positioniereinrichtung muß aber zugleich in der Lage sein, das Testfeld sehr präzise reproduzierbar an die gleiche Stelle relativ zur Meßeinheit zu plazieren. Für einen flachen Testträger, wie er zur Verwendung mit dem erfindungsgemäßen Gerät in Frage kommt, muß diese Anforderung in zweierlei Hinsicht beachtet werden. Zum einen muß die auswertbare Fläche des Testfeldes genau unter der Meßeinheit positioniert sein. Diesbezüglich sind oft hohe Anforderungen zu stellen, weil die auswertbare Testfeldfläche sehr klein ist, um einerseits nur den homogensten mittleren Bereich des Testfeldes zu nutzen und andererseits mit möglichst wenig Reagenzien und einer möglichst kleinen Probenmenge auszukommen. Zum zweiten muß auch der Abstand zwischen der Testfeldoberfläche und der Meßeinheit äußerst genau reproduzierbar sein, da jede unkontrollierte Variation dieses Abstandes das Meßergebnis verfälschen würde. Bekannte Geräte der eingangs bezeichneten Art sind beispielsweise in der EP-A-37484, in der GB-A-1303758 und in der GB-A-1598086 beschrieben. Bei allen diesen Geräten wird die Positionierung des als Teststreifen ausgebildeten Testträgers in Richtung seiner Testfeldfläche dadurch erreicht, daß der Teststreifen in einen entsprechenden Kanal oder Schacht eingeführt wird, dessen Seitenwände den Teststreifen führen, bis er an einem Anschlag anliegt. Der Kanal ist auch geeignet, eine Justierung in Richtung senkrecht auf die Testfeldfläche zu erreichen, wenn er konisch ausgebildet ist, wie dies beispielsweise der GB-A-1303758 zu entnehmen ist. In diesem Fall erweist sich jedoch das Einführen des Teststreifens als schwierig.

Besonders vorteilhafte Testträger, wie sie in der DE-A-3130749 beschrieben sind, ermöglichen es, die gewünschten analytischen Bestimmungen unmittelbar an einer Blutprobe vorzunehmen, ohne daß es notwendig ist, zuvor durch Zentrifugieren Plasma oder Serum zu gewinnen. Zu diesem Zweck hat der dort beschriebene Testträger eine auf dem Basisstreifen angeordnete flache Separationsschicht, auf die an einem Ende die Blutprobe aufgegeben wird. Die Separationsschicht besteht aus Glasfasermaterial, das die roten Blutkörperchen in der Nähe der Aufgabestelle zurückhält. Das Blutplasma breitet sich dagegen in der Schicht aus, so daß in dem von der Aufgabestelle entfernten Bereich der Separationsschicht ein "Plasmasee" zur Verfügung steht. Über diesem befindet sich mindestens eine Reaktionsschicht, die aus einem mit Reagenzien imprägnierten Papier besteht und nach Art einer Klappe nur an einer Kante an dem Testträger befestigt ist. Zwischen dieser Schicht und der Separationsschicht kann sich ein hydrophobiertes Netz befinden. Die Reaktion läßt sich nach der wie beschrieben erfolgten Gewinnung des Plasmas bei einem derartigen Testträger einfach dadurch starten, daß auf die einseitig befestigte Klappe vollflächig ein Druck ausgeübt wird. Zur Auswertung eines derartigen Testträgers muß das entsprechende Auswertegerät eine Positioniereinrichtung haben, die den Teststreifen unabhängig davon, ob er gegen die Meßeinheit angedrückt wird oder nicht, genau positioniert.

Der Erfindung liegt die Aufgabe zugrunde, ein Gerät zur Auswertung von Testträgern und insbesondere dessen Einrichtung zur Aufnahme und Positionierung der Testträger mit dem Ziel einer möglichst einfachen Handhabung und höchster Genauigkeit der Auswertung zu verbessern.

Diese Aufgabe wird durch ein Gerät gemäß Patentanspruch 1 gelöst.

Die Maßnahme, den bevorzugt teststreifenförmigen Testträger unter Spannung entlang seiner Längsachse beidseitig zu haltern, bietet trotz augenfälliger scheinbarer Nachteile bezüglich der Einfachheit der Konstruktion andererseits erhebliche Vorteile. Insbesondere ist der Teststreifen in seiner Längserstreckung sehr genau festgelegt. Dadurch wird es beispielsweise möglich, einen auf seiner Rückseite (d.h. der der Auflagefläche zugewandten Seite) aufgebrachten Magnetcode nach dem Einspannen genau zu lesen. Durch diese Maßnahme ist es auch möglich, den Magnetlesekopf zum Lesen des Magnetcodes von hinten mit dem notwendigen Anpressdruck anzudrücken, ohne unbedingt auf der Vorderseite des Testträgers (d.h. der von der Auflagefläche abgewandten Seite) einen Gegendruck ausüben zu müssen.

Die Halteeinrichtungen können in vielerlei Weise so konstruiert sein, daß sie eine Öffnungsstellung haben, in der sie den Testträger freigeben und eine geschlossene Stellung, in der sie ihn arretieren. Geeignet sind beispielsweise entsprechende Klemmen, die magnetisch oder durch Federkraft betätigt werden. Eine bevorzugte Ausführungsform der Erfindung sieht vor, daß das Arretierungselement den Testträger nicht durch Kraftschluß, sondern dadurch festhält, daß es in eine entsprechende Ausnehmung des Testträgers formschlüssig eingreift. Bei einer besonders einfachen Gestaltung ist die Ausnehmung ein im Testträger jeweils nahe an seinen Enden vorgesehenes Loch, in die ein stiftförmiges Arretierungselement in der geschlossenen Stellung der Halteinrichtung eindringt. Diese Konstruktion hat gegenüber dem reinen Klemmen den Vorteil, daß die Halteeinrichtungen leicht betätigbar sind und doch den Testträger so gut festhalten, daß er unter eine verhältnismäßig hohe Spannung in seiner Längsrichtung gesetzt werden kann.

Der Arretierstift kann statt eines kreisrunden Querschnitts auch andere Querschnitte ausweisen, wobei die Ausnehmungen in dem Testträger der jeweiligen Querschnittsform dergestalt angepasst sind, daß dieser präzise und reproduzierbar gehalten und gespannt wird.

Die Spannung in Längsrichtung des Testträgers kann in vielerlei Weise erreicht werden, beispielsweise durch elektrische Mittel. Besonders einfach ist eine bevorzugte Ausführungsform, bei der ein beispielsweise pneumatisches oder einfach mechanisches Federelement mindestens eines der Arretierelemente in Längsrichtung des Teststreifens von dessen Mitte weg mit einer Vorspannung beaufschlagt. Der langgestreckte Testträger wird bei einer derartigen Konstruktion bevorzugt zunächst an der seinem Einführende zugeordneten Halteeinrichtung befestigt und dann wird gegen die Vorspannung an seinem Handhabungsende das Arretierelement in Eingriff mit der entsprechenden Ausnehmung des Testträgers gebracht. Dies kann manuell geschehen. Es kann aber auch ein entsprechender Schieber vorgesehen sein, der zweckmäßigerweise zugleich dazu vorgesehen ist, solche Gerätefunktionen auszulösen, die nach dem Befestigen des Testträgers ausgelöst werden müssen. Der Schieber kann auch als Klappe ausgebildet sein, die die Aufnahmeöffnung des Geräts schließt.

Um das Einführen des Teststreifens und das Arretieren seines Einführendes zu erleichtern, ist die entsprechende Halteeinrichtung gemäß einer weiteren bevorzugten Ausführungsform so ausgebildet, daß sie ein Führungselement für das Einführende des Teststreifens hat. Das Führungselement umfasst bevorzugt eine konisch in Einführrichtung sich verengende Nut oder einen entsprechenden Schlitz, der das Einführende des Testträgers in eine Position bringt, in der das Arretierelement der Halteeinrichtung in die entsprechende Ausnehmung des Testträgers eindringen kann. Zugleich sorgt das Führungselement auch für eine Führung in Richtung senkrecht auf die Teststreifenoberfläche.

Um die dem Einführende des Testträgers zugeordnete Halteeinrichtung aus der offenen Stellung in die geschlossene Stellung zu bringen, in der ihr Arretierelement in die Ausnehmung des Testträgers eindringt, ist sie bevorzugt vom Einführende des Testträgers betätigbar. Zu diesem Zweck kann beispielsweise ein Photoelement vorgesehen sein, das beim Einführen des Testträgers eine elektromagnetische Betätigung des Arretierelements auslöst. Besonders bevorzugt ist ein Betätigungselement, das eine schwenkbare Hebeleinrichtung einschließt, die in Wirkverbindung mit einem Federelement steht. Die nähere Konstruktion kann bevorzugt der in der EP-A-37484 beschriebenen Konstruktion entsprechen. Dadurch wird mit einfachen Mitteln und ohne die Notwendigkeit einer Hilfsenergiequelle eine zuverlässige Betätigung der dem Einführende des Testträgers zugeordneten Halteeinrichtung erreicht. Zum Auswerfen des Testträgers kann die Hebeleinrichtung vorteilhaft mit einer Auswerferstange verbunden sein, die manuell oder mit Hilfe von Hilfsmitteln betätigt wird, wenn der Testträger ausgeworfen werden soll.

Gemäß einer besonders bevorzugten Ausführungsform ist die Positioniereinrichtung so gestaltet, daß gegen den eingespannten Testträger etwa im Bereich seines Testfeldes, von seiner der Auflagefläche zugewandten Rückseite her, eine federnd gelagerte Andruckplatte drückt. Die Andruckplatte ist bevorzugt so gelagert, daß sie in dem Bereich, in dem sie im Betrieb federnd nachgibt, allseitig kippbar ist. In der Meßposition drückt andererseits die Meßeinheit bevorzugt mit einer Blende oder dergleichen von der Vorderseite des Testträgers her auf dessen Testfeld.

Durch diese Konstruktion werden zwei wesentlich Vorteile miteinander verbunden. Zum einen drückt die Andruckplatte gegen die Rückseite des Teststreifens, sobald dieser in die Halteeinrichtungen eingespannt ist, unabhängig davon, ob auf der anderen Seite ein Gegendruck auf das Testfeld ausgeübt wird. Die Andruckplatte ist bevorzugt temperierbar ausgebildet. Dadurch wird das Testfeld bereits unmittelbar nach dem Einspannen des Testträgers auf die gewünschte Temperatur gebracht. Davon unabhängig ist es möglich, erst zu einem späteren Zeitpunkt Druck auf das Testfeld von seiner Oberseite auszuüben, wie dies von besonderer Bedeutung ist, wenn der zuvor erwähnte Testträger mit Klappe gemäß der DE-A-3130749 ausgewertet werden soll. Zum zweiten werden durch die federnde Andruckplatte unterschiedliche Testfelddicken und praktisch kaum vermeidbare Toleranzen in der Führung der Meßeinheit bzw. deren Meßblende in vorteilhafter Weise ausgeglichen.

Bevorzugt ist die Auflagefläche zumindest in Teilbereichen vom Testträger weg konvex gekrümmt ausgebildet. Daraus resultiert unabhängig von der näheren Gestaltung der Krümmung ein Handhabungsvorteil, weil das Handhabungsende des Testträgers, solange dieser nur von der seinem Einführungsende zugeordneten Halterung gehalten wird, einen vorgegebenen Abstand von der Auflagefläche hat, so daß der Testträger leicht zugeführt und herausgenommen werden kann. Die gekrümmte Auflagefläche erleichtert es auch, das Handhabungsende des Testträgers in der weiter oben beschriebenen Art und Weise mit Hilfe eines Schiebers über das in Längsrichtung des Testträgers federbelastete Arretierelement zu drücken und seine Ausnehmung mit diesem in Eingriff zu bringen.

Besonders vorteilhaft ist eine gekrümmte Auflagefläche auch, wenn der Testträger auf seiner Rückseite einen Magnetcode trägt, der von einem entsprechenden Lesekopf gelesen werden soll. Um den notwendigen engen Kontakt zwischen dem Spalt des Lesekopfes und der magnetischen Beschichtung des Testträgers zu erreichen, ist die Auflagefläche für den Testträger und die Bewegungsbahn des Lesekopfes relativ zu dieser so gestaltet, daß der Scheitelpunkt des Lesekopfes an jeder Stelle seiner Bewegungsbahn höher liegt als die Auflagefläche des Teststreifens. Dadurch wird erreicht, daß auf jedem Teil der Bewegungsbahn die auf den Teststreifen wirkenden Spannkräfte eine Komponente in Richtung auf den Lesekopf erzeugen. Dies läßt sich zwar prinzipiell auch mit einer völlig gerade verlaufenden Auflagefläche erreichen, aus der der Lesekopf geringfügig hervorsteht. Ein besserer Andruck zwischen magnetisch beschichteter Fläche und Lesekopf wird aber erzielt, wenn die Auflagefläche im Bereich der Bewegungsbahn des Lesekopfes gleichmäßig gekrümmt ist und der Lesekopf geringfügig hervorsteht.

Konstruktiv besonders einfach ist dabei eine Lösung, bei der die Positioniereinrichtung in ihrer Gesamtheit um eine Schwenkachse schwenkbar ist und bei der der Magnetlesekopf gerätefest gelagert ist. Die Auflagefläche verläuft dabei in dem Bereich des relativen Bewegungsweges von magnetischer Schicht und Lesekopf kreisförmig um die Schwenkachse und hat einen Schlitz, durch den der Lesekopf gegenüber der Auflagefläche geringfügig hervorsteht. Dadurch, daß bei dieser Konstruktion der Magnetlesekopf gerätefest positioniert ist, kann er besonders einfach mit einer Justiereinrichtung ausgestattet sein. Die insgesamt schwenkbare Positioniereinrichtung kann im Gesamtgerät vorteilhaft so angeordnet sein, daß der Teststreifen in der einen Endstellung des Schwenkweges bequem in die Halteeinrichtungen eingespannt werden kann, während in der anderen Schwenkstellung das Testfeld in Kontakt mit der Meßeinheit gebracht und ausgewertet wird. Während der Bewegung von der ersten in die zweite Endstellung erfolgt die Lesung des Magnetcodes. Die Codierung enthält insbesondere Daten über die chargenspezifische Auswertekurve, d.h. im Falle einer reflexionsphotometrischen Auswertung den funktionellen Zusammenhang zwischen dem gemessenen diffusen Reflexionvermögen und der Konzentration der zu bestimmenden Substanz in der Probe. Daneben können auch weitere Informationen, insbesondere über die vom Gerät einzuhaltenden Verfahrensbedingungen (z.B. Temperatur, Meßzeit) mitgeteilt werden.

Gemäß einer weiteren Ausführungsform richtet sich die vorliegende Erfindung auf ein Gerät der eingangs bezeichneten Art, das besonders zur Auswertung der bereits erwähnten Typen von Testträgern ausgebildet ist, die eine nach Art einer Klappe an einer Kante an dem Testträger befestigte Deckschicht aufweisen. Wie erwähnt, sind besondere Ausführungsformen solcher Testträger in der DE-A-3130749 beschrieben. Hier kommt es wesentlich darauf an, daß das Andrükken der Deckschicht auf den Testträger in einer solchen Art und Weise geschieht, daß der Einschluß von Blasen zwischen der Deckschicht ("Klappe") und dem darunter befindlichen "Plasmasee" möglichst vollständig vermieden wird.

Um dieses Ziel zu erreichen, hat das Gerät ein Blendenelement mit einer Kontaktfläche zum Anpressen der Deckschicht, wobei das Blendenelement und/oder die Positioniereinrichtung dergestalt gelagert und antreibbar ist, daß die Kontaktfläche beim Anpressen der Deckschicht relativ zu dem Testträger eine Schwenkbewegung um eine Schwenkachse macht, die in dichter Nachbarschaft zur Befestigungskante der Deckschicht liegt.

Das Blendenelement ist im einfachsten Fall ein Metallteil mit einer ebenen unteren Kontaktfläche, die in Kontakt mit der Klappe des Testträgers gebracht wird und mit einem kreisrunden Loch, das als Fenster dient, durch welche die Verfärbung der mit der Klappe verbundenen Testschicht optisch ausgewertet werden kann. Durch die beschriebene Bewegung wird erreicht, daß sich der Druck beim Andrücken der Kontaktfläche des Blendenelements gegen die Klappe im Bereich des Testfeldes unter Vermeidung von Lufteinschlüssen gleichmäßig fortpflanzt.

Besonders bevorzugt ist das Blendenelement dergestalt gelagert und antreibbar, daß die Kontaktfläche in der letzten Phase der Annäherung an die Testträgerklappe eine gleitende Relativbewegung von der Befestigungskante der Klappe weg macht. Dadurch wird die Gefahr von Lufteinschlüssen noch besser vermieden und die Klappe besonders gleichmäßig angedrückt.

Die komplizierte Bewegung des Blendenelements relativ zum Testträger läßt sich prinzipiell mit Hilfe entsprechender Servoantriebe und elektronischer Steuerung in vielerlei Weise realisieren. In der Praxis ist jedoch die erforderliche Zuverläßigkeit und kostengünstige Konstruktion zu berücksichtigen. Dabei ist es besonders vorteilhaft, wenn für den Fall, daß die gesamte Positioniereinrichtung in der zuvor beschriebenen Art und Weise schwenkbar ist, der gleiche Antrieb auch für das Andrücken der Testträgerklappe eingesetzt wird. In diesem Sinne ist es vorteilhaft, wenn das Blendenelement über einen Kupplungsmechanismus mit dem Antrieb für die Positioniereinrichtung verbunden ist. Besonders vorteilhaft ist das Blendenelement ein im Betrieb mit der Meßeinheit fest verbundenes Teil, wobei der erwähnte Antrieb über den Kupplungsmechanismus die Positioniereinrichtung und die Meßeinheit so antreibt, daß die gewünschte Relativbewegung zwischen der Positioniereinrichtung und der Meßeinheit erreicht wird.

Praktisch geeignet sind hier alle Kupplungsmechanismen, die hinreichend spielfrei arbeiten, einfach aufgebaut und nicht zuviel Kraft verbrauchen. Insbesondere kommt eine entsprechende Kulissenführung in Frage. Besonders bevorzugt, weil besonders einfach aufgebaut und zuverlässig in der Funktion ist ein Kupplungsmechanismus, der zwei ineinandergreifende Zahnkränze hat, die über entsprechende beispielsweise sektorförmige Verbindungsteile einerseits mit der Meßeinheit und andererseits mit der Positioniereinrichtung verbunden sind. Die beiden Zahnkränze verlaufen kreisförmig um zwei Schwenkachsen, um die einerseits die Baueinheit zu der die Positioniereinrichtung gehört, und andererseits die Baueinheit, zu der die Meßeinheit gehört, geschwenkt werden.

Ein Teil der die Positioniereinrichtung tragenden Baueinheit bildet die Andruckplatte, deren dem Testträger zugewandte Oberfläche bevorzugt im wesentlichen tangential zu der Krümmung der Auflagefläche verläuft und glatt in diese übergeht. Die Kontaktfläche des Blendenelements, die zum Andrücken der Klappe eines entsprechenden Testträgers vorgesehen ist, verläuft bevorzugt nicht senkrecht zu dem ihre Mitte kreuzenden Radius um die Schwenkachse der die Meßeinrichtung tragenden Baueinheit. Vielmehr ist sie bevorzugt so orientiert, daß ein Lot auf die Kontaktfläche auf der von der Positioniereinrichtung abgewandten Seite der Schwenkachse der Meßeinrichtung verläuft. Der der Meßeinheit zugeordnete Zahnkranz hat bevorzugt einen kleineren Durchmesser als der der Positioniereinrichtung zugeordnete Zahnkranz.

Durch diese Konstruktionsweise wird eine einfache und zuverlässige Kopplung der beiden Baueinheiten erreicht. Durch Versuche läßt sich ohne weiteres eine solche Zuordnung der Bauteile ermitteln, daß die erwähnten geometrischen Bedingungen bei der Annäherung der Meßblende mit ihrer Kontaktfläche an die Klappe des Testträgers erfüllt werden.

Wie erwähnt, ist das erfindungsgemäße Gerät besonders zur Auswertung von Testträgern der in der DE-A-3130749 beschriebenen Art geeignet. Hier verbinden sich die erwähnten Vorteile der einzelnen Konstruktionsmerkmale in idealer Weise miteinander. Durch die Einspannung des streifenförmigen Testträgers zwischen den Haltevorrichtungen wird dieser genau ausgerichtet. Gleichzeitig drückt sich die Andruckplatte von hinten gegen Testträger im Bereich des Testfeldes und beginnt dieses zu temperieren. Dies ist möglich, während zugleich noch kein Druck von der Gegenseite auf das Testfeld ausgeübt wird. Dort läuft in dieser Zeit die Plasmagewinnungsphase in der weiter oben beschriebenen Weise ab. Zu einem auf den jeweiligen Test abgestimmten Zeitpunkt und mit einer entsprechenden Geschwindigkeit wird dann die Positionierungseinrichtung tragende Baueinheit aus ihrer ersten Position in die zweite Position geschwenkt, wobei eine auf der Rückseite des Testträgers vorhandene bevorzugt magnetische Codierung gelesen werden kann. Der Bewegungsablauf läßt sich ohne weiteres so steuern, daß zu einem vorbestimmten Zeitpunkt die Meßeinheit mit der Meßblende über ihre Kontaktfläche auf die Klappe des Testträgers drückt und damit die Reaktion eingeleitet wird. Soweit dies gewünscht wird, kann noch eine Belüftungsphase vorgesehen sein, bei der die Meßeinheit noch einmal zurückgeschwenkt wird, um den Druck vom Testfeld zu nehmen und dieses einer Belüftung auszusetzen. Schließlich wird zu einem weiteren vorgegebenen Zeitpunkt erneut die Kontaktfläche der Meßblende mit der Meßeinheit gegen das Testfeld gedrückt und die Messung vorgenommen.

Die Erfindung wird nun anhand der Zeichnung Ausführungsbeispielen näher erläutert mit. Es zeigen:

Fig. 1) Eine schematische Darstellung eines Teils eines erfindungsgemäßen Geräts, insbesondere der die Meßeinheit und die Positioniereinrichtung tragenden Baueinheiten, wobei ein teststreifenförmiger Testträger gerade eingeführt wird.

Fig. 2) Die Vorrichtung nach Fig. 1, wobei sich die dem Einführende des Testträgers zugeordnete Halteeinrichtung in ihrer geschlossenen Stellung befindet.

Fig. 3) Die Vorrichtung nach Fig. 1 mit vollständig eingelegtem, zwischen beiden Halteeinrichtungen gespanntem Testträger.

Fig. 4) Die Vorrichtung nach Fig. 1, wobei die Positioniereinrichtung und die Meßeinheit sich in der Meßposition befinden.

Fig. 5a bis 5c eine prinzipielle Darstellung der Bewegungsabläufe beim Andrücken einer Testträgerklappe auf den Testträger.

Fig. 6) Eine Schnittdarstellung entlang der Linie VI-VI in Fig. 4.

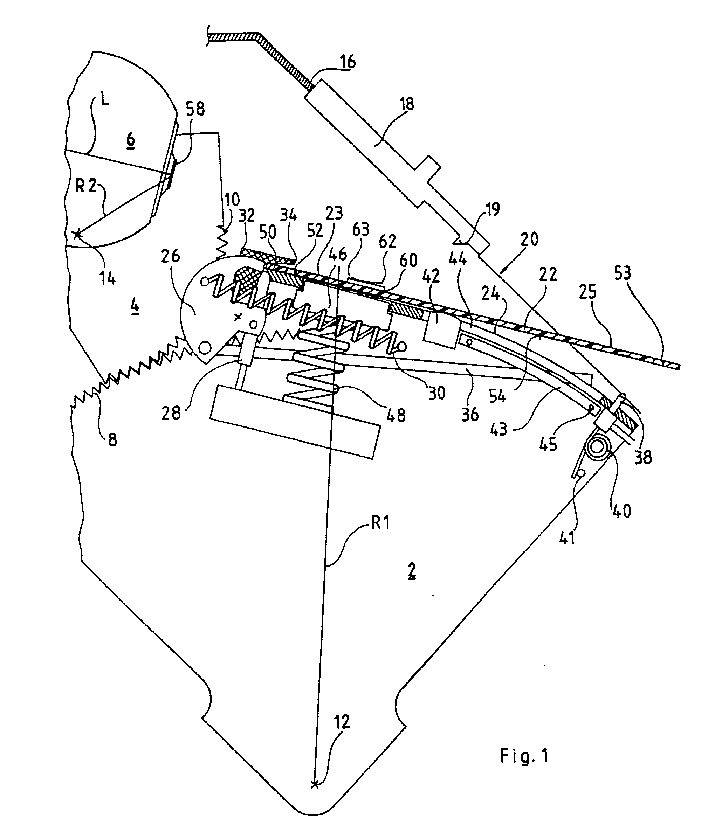

Fig. 1 zeigt schematisch eine seitliche Ansicht der Vorrichtung mit einem die Positioniereinrichtung tragenden Aufnahmeschlitten 2 und einem Tragschlitten 4 für eine Meßeinheit 6. Die Meßeinheit ist hier als eine Ulbricht'sche Kugel ausgebildet, mittels welcher von einem beleuchteten Testfeld reflexionsphotometrisch die diffuse Reflexion gemessen wird. Im Rahmen der Erfindung liegen selbstverständlich auch andere Meßeinheiten.

Der Aufnahmeschlitten 2 und der Tragschlitten 4 weisen sektorförmige Teile auf, welche an ihrer Stirnfläche ineinandergreifende Zahnkränze 8, 10 enthalten. Die beiden Schlitten 2, 4 sind um Drehachsen 12, 14 schwenkbar, wobei aufgrund der Zahnkränze eine unmittelbare Kupplung der Bewegung erfolgt. Die beiden Schlitten bilden jeweils mit den an ihnen befestigten Teilen schwenkbare Baueinheiten. Zur Schwenkung des Aufnahmeschlittens und somit auch des Tragschlittens ist ein hier nicht weiter dargestellter elektrischer Motor vorgesehen. An einem hier nur angedeuteten Gehäuse 16 ist eine verschiebbare Klappe 18 vorgesehen, mittels welcher eine Aufnahmeöffnung 20 verschließbar ist. Durch die Aufnahmeöffnung 20 kann ein als Teststreifen 22 ausgebildeter Testträger mit seinem Einführende 23 eingeführt werden. Die Vorrichtung mit dem Aufnahmeschlitten Z und dem Trageschlitten 4 ist auf einem Gestell innerhalb des Gehäuses 16 angeordnet. Im Bereich der Aufnahmeöffnung weist der Aufnahmeschlitten 2 eine gekrümmte Auflagefläche 24 für den Teststreifen 22 auf; ein ungehindertes Einführen des an seinem Handhabungsende 25 festgehaltenen Teststreifens 22 ist ohne Schwierigkeiten möglich.

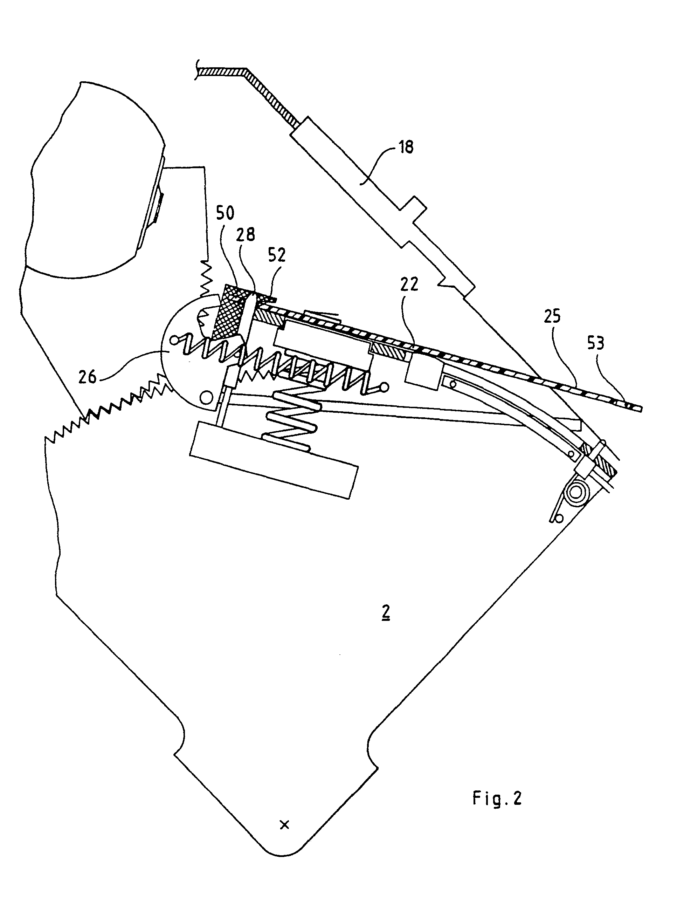

Der Aufnahmeschlitten 2 enthält ferner ein Betätigungselement in Form einer als Nockenscheibe 26 ausgebildeten Hebeleinrichtung, mit welcher ein Arretierstift 28 gekoppelt ist. Mit dem vorderen Ende 50 liegt der Teststreifen 22 am oberen Ende der Nockenscheibe 26 an. Mittels eines Federelements wird die Nockenscheibe sowohl in der in Fig. 1 dargestellten ersten Endstellung als auch in der in den Fig. 2 bis 4 dargestellten zweiten Endstellung jeweils in Richtung von einem zwischen beiden Endstellungen liegenden Scheitelpunkt des Schwenkweges weg mit einer Kraft beaufschlagt. Im Bereich des Arretierstiftes 28 befindet sich auf dem Aufnahmeschlitten Z noch ein Führungselement 32 mit einem Führungsschlitz 34 für den Teststreifen 22. Der Führungsschlitz läuft sowohl in der Zeichenebene als auch in einer Ebene senkrecht dazu leicht konisch zu. Dadurch führt das Führungselement 32 das Einführende 23 des Teststreifens 22 in die Position, in der der Arretierstift 28 in die entsprechende Ausnehmung 52 des Teststreifens 22 eindringen kann. Mit der Nockenscheibe 26 ist ferner eine Auswerferstange 36 verbunden. Am anderen Ende des Aufnahmeschlittens 2 befindet sich eine zweite Halteeinrichtung für den Teststreifen 22. Sie schließt als Arretierelement einen Spannstift 38 ein, der von einer Feder 40 beaufschlagt ist, die sich an einem Widerlager 41 abstützt.

Im Bereich der Auflagefläche 24 ist ein Lesekopf 42 für einen auf der Rückseite 54 des Teststreifens 22 aufgebrachten Magnetcode gestellfest angeordnet. Die Auflagefläche 24 des Aufnahmeschlittens 2 weist für den Lesekopf 42 einen sich in ihrer Längsrichtung erstreckenden Schlitz 44 auf. Der Schlitz 44 ist mittels eines Schiebers 43 in der dargestellten Position des Aufnahmeschlittens 2 im wesentlichen verschlossen. Der Schieber 43 ist auf senkrecht zur Zeichenebene angeordneten Bolzen 45 im Aufnahmeschlitten 2 bewegbar. Mittels einer nicht näher dargestellten Mechanik kann der Schieber 43 zur Freigabe des Schlitzes 44 für den Lesekopf 42 beim Schwenken des Aufnahmeschlittens 2 zur Seite bewegt werden. Der Lesekopf 42 ragt in einem vorgegebenen Abstand über die Auflagefläche 24 für den Teststreifen hinaus. Schließlich ist eine Andruckplatte 46 vorgesehen, um in der Meßposition einen definierten Anpressdruck und ferner auch eine planparallele Anlage des Testfeldes zu erhalten. Das zugehörige Federelement 48 weist zum Toleranzausgleich eine progressive Federkennlinie auf.

Fig. 2 zeigt die Vorrichtung mit einem vollständig eingeschobenen Teststreifen 22. Mittels des vorderen Endes 50 des Teststreifens 22 wird die Nockenscheibe 26 in die dargestellte Position geschwenkt. Einzelheiten hierzu sind der EP-A-0037484 zu entnehmen. Hierbei wurde der Arretierstift 28 nach oben bewegt und er greift nunmehr in eine Ausnehmung 52 des Teststreifens ein. Das Einführende 23 des Teststreifens 22 ist folglich in definierter Weise auf dem Aufnahmeschlitten 2 positioniert.

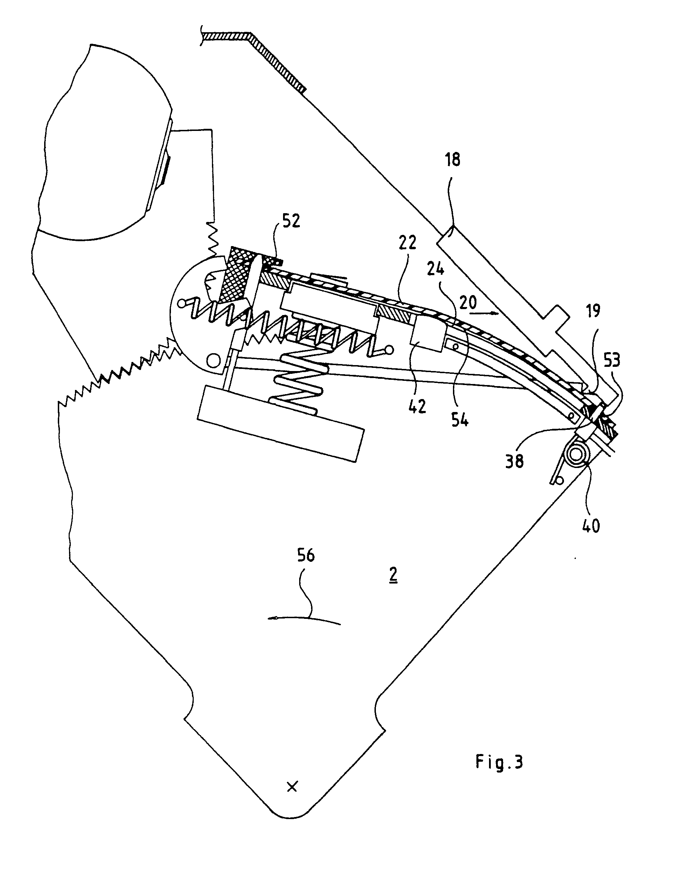

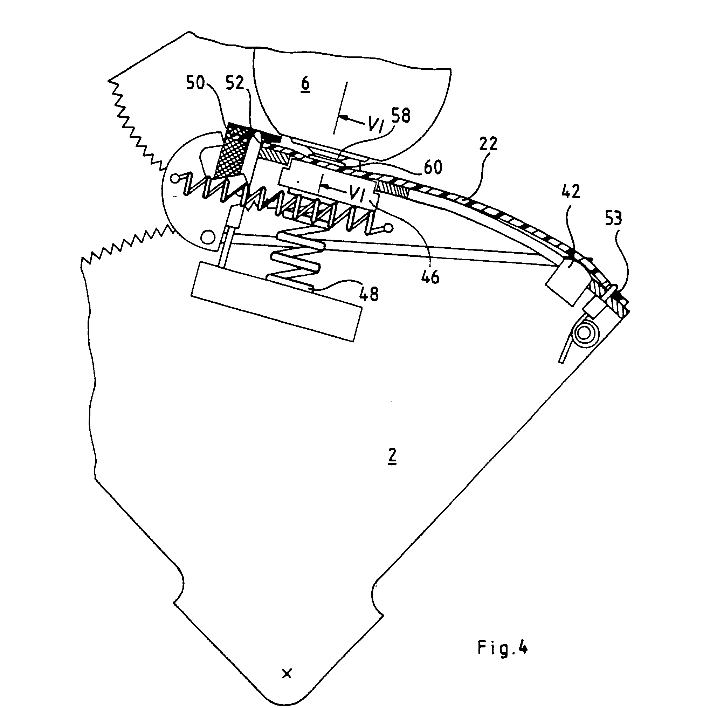

In Fig. 3 ist die Klappe 18 in der die Aufnahmeöffnung 20 verschließenden Stellung dargestellt. Beim Herunterschieben der Klappe 18 wurde mit Hilfe eines entsprechenden Vorsprungs 19 der Teststreifen 22 auch auf die gekrümmte Auflagefläche 24 gedrückt. Hierbei wurde auch gleichzeitig der Spannstift 38 in eine weitere Ausnehmung 53 des Teststreifens 22 eingeführt. Wie ersichtlich, beaufschlagt die Feder 40 den Spannstift 38 mit einer Kraft in Längsrichtung des Teststreifens von dessen Mitte weg, so daß eine entsprechende Zugkraft auf den Teststreifen 22 einwirkt und dieser somit fest auf dem Aufnahmeschlitten 2 aufgespannt ist. Der Lesekopf 42 ragt etwas über die Auflagefläche 24 hinaus, wodurch eine gute Umschlingung durch den Teststreifen 22 erreicht wird. Auf der Rückseite 54 des Teststreifens 22 befindet sich eine Magnetschicht, welche binärcodierte Daten enthält. Diese Daten werden beim Schwenken des Schlittens in Richtung des Pfeils 56 automatisch gelesen und in einer geeigneten Elektronik entsprechend ausgewertet. In Fig. 4 ist die Endposition der Schwenkbewegung dargestellt. Man erkennt, daß durch das Verschwenken des Aufnahmeschlittens 2 gegenüber dem ortsfesten Lesekopf 42 sich dieser nach dem Schwenkvorgang am Handhabungsende des Teststreifens 22 befindet, d.h. das der Magnetlesekopf während der Schwenkbewegung dem gesamten mit einer Magnetschicht bedeckten Teil des Teststreifens 22 überstrichen hat.

Fig. 4 zeigt den Aufnahmeschlitten 2 und die Meßeinheit 6 in der Meßposition. Die Meßblende 58 liegt definiert auf dem Meßfeld 60 des Teststreifens auf, wobei über die Andruckplatte 46 und das Federelement 48 ein vorgegebener Anpressdruck aufrecht erhalten wird.

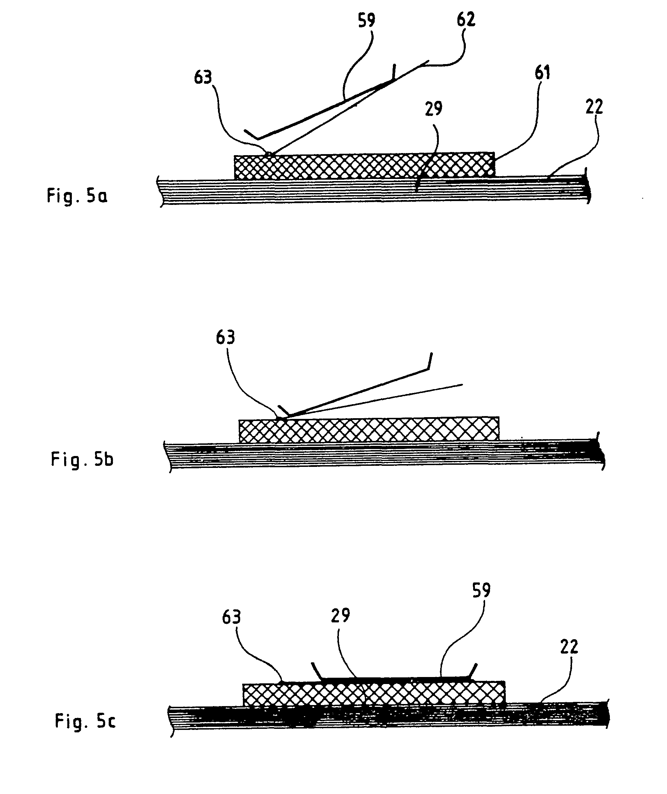

Fig. 5 zeigt schematisch in einer stark übertriebenen Darstellung verschiedene Phasen der Bewegung der Kontaktfläche 59 der Blende 58 bei der Annäherung an den Teststreifen 22, wobei dieser einen ortfest dargestellten Bezugspunkt bildet. Man erkennt eine auf dem Basisstreifen 29 des Teststreifens 22 vollflächig aufliegende Plasmagewinnungsschicht 61. Darüber befindet sich eine als Klappe 62 ausgebildete in Aufsicht rechteckige Deckschicht, die nur an einer Kante 63, die im folgenden als Befestigungskante bezeichnet wird, mit dem Basisstreifen 29 (in der dargestellten Ausführungsform über die Plasmagewinnungsschicht 61) verbunden ist. In der in Fig. 5a dargestellten Bewegungsphase hat eine Kante der Kontaktfläche 59 gerade die Klappe 62 berührt und beginnt, diese nach unten zu drücken. In Fig. 5b befindet sich die Klappe 62 in einer Position kurz bevor sie mit der Plasmagewinnungsschicht 61 in Kontakt kommt. In Fig. 5c liegt die Kontaktfläche 59 vollständig auf der Klappe 62 und diese auf der Plasmagewinnungsschicht 61 auf. Man erkennt, daß die Kontaktfläche 59 eine Bewegung ausführt, die sich im wesentlichen aus zwei Komponenten zusammensetzt, nämlich eine Schwenkbewegung und eine Bewegung in Richtung parallel zur Oberfläche des Teststreifens 22 von der Befestigungskante 63 der Klappe 62 weg. Die Schwenkbewegung hat in der Darstellung der Fig. 5, bei der, wie erwähnt, das Bezugssystem sich mit dem Teststreifen 22 bewegt, so daß dieser in der Fig. ortsfest erscheint, keine feste Schwenkachse. Wie aus den Figuren zu ersehen ist, bewegt sich die Schwenkachse aber in der dargestellten Annäherungsphase jedenfalls in der Nähe der Befestigungskante 63 der Klappe 62 und verläuft näherungsweise parallel zu dieser. Dabei ergibt sich, daß in der letzten Phase der Annäherung sich der von der Kontaktfläche 59 auf die Klappe ausgeübte Druck von deren Befestigungskante weg, also in der Darstellung der Fig. 5 von links nach rechts aufbaut. Dadurch werden Lufteinschlüsse vermieden. Es ist unschädlich, daß, wie in Fig. 5a zu ersehen, zu Anfang der Annäherungsphase die Kontaktfläche 59 die Klappe 62 zuerst an dem von der Befestigungskante 63 abgewandten Ende kontaktiert. Entscheidend ist lediglich, daß die zitierte Schwenkbewegung in der letzten Phase der Annäherung (Fig. 5b, Fig. 5c) realisiert wird.

Ein noch gleichmäßigeres Andrücken der Klappe 62 gegen die Plasmagewinnungsschicht 61 wird durch die beschriebene Bewegungskomponente parallel zur Oberfläche des Testträgers, in der Fig. 5 von links nach rechts erreicht.

Der anhand von Fig. 5 beschriebene Bewegungsablauf läßt sich bei einer Konstruktion, wie sie in den Fig. 1 bis 4 dargestellt ist, dadurch realisieren, daß die Andruckplatte 46 und die Meßblende 58 relativ zu den jeweils ihre Mitte kreuzenden Radien (R1, bzw. R2) der zugehörigen Schwenkachsen 12 bzw. 14 in entsprechender Weise angeordnet werden, wobei die momentane Bewegung in der Annäherungsphase sowohl von der Neigung der Andruckplatte 46 bzw. der Meßblende 58 zu den jeweiligen Radien als auch durch deren Abstand von der Schwenkachse bestimmt wird. Welche Anordnung im Einzelfall zu wählen ist, läßt sich mit Hilfe der Getriebelehre zeichnerisch oder durch Optimierungsversuche bestimmen. Als besonders vorteilhaft hat sich eine Konstruktion der dargestellten Art bewährt, bei der die Andruckplatte 46 die Krümmung der Auflagefläche 24 näherungsweise tangential fortsetzt und bei der die Kontaktfläche 59 der Meßblende 58 so gegen den ihre Mitte kreuzenden Radius R2 durch die zugehörige Schwenkachse 14 geneigt ist, daß ein Lot L auf die Kontaktfläche 59 auf der von dem Aufnahmeschlitten 2 abgewandten Seite der Schwenkachse 14 verläuft.

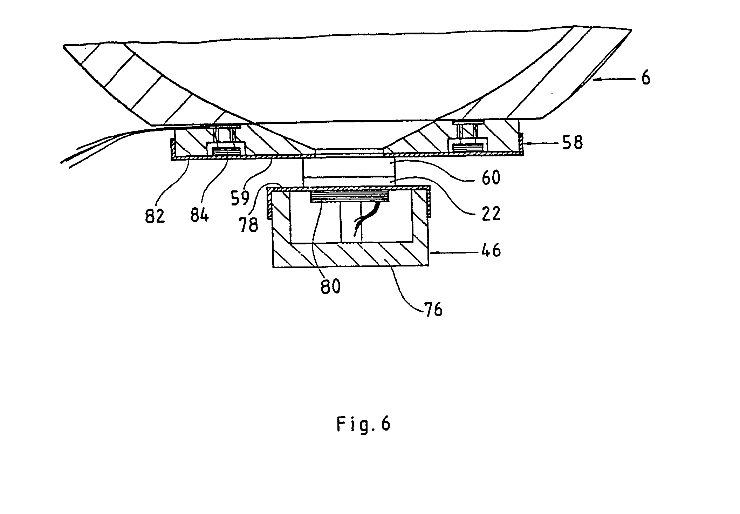

Fig. 6 zeigt vergößert den unteren Teil der Meßeinheit 6 mit der Blende 58. Es ist ferner ein Träger 76 mit einer Heizplatte 78 zu erkennen, die Teile der Andruckplatte 46 sind. Zwischen der Heizplatte 78 und der Meßblende 58 ist der Teststreifen 22 mit dem Testfeld (bestehend aus Plasmagewinnungsschicht 61 und Klappe 62) zu sehen, wobei sich hier der Teststreifen 22 senkrecht zur Zeichenebene erstreckt. Die Heizplatte 78 ist Bestandteil einer Heizeinrichtung, welche ein Heizelement 80 aufweist. Auf der Meßblende 58 ist ebenfalls eine Heizplatte 82 mit Heizelementen 84 angeordnet. Besonders vorteilhaft ist, daß die Andruckplatte schon bei der in Fig. 3 dargestellten Phase, also sobald der Teststreifen 22 zwischen den beiden Halteinrichtungen gespannt ist, von hinten im Bereich des Testfeldes 60 gegen den Teststreifen 22 gedrückt wird. Dadurch ist eine Vortemperierung bereits in dieser Phase möglich, also möglicherweise längere Zeit, bevor die Meßeinheit 6 mit der Meßblende 58 von der Vorderseite gegen das Testfeld 60 gedrückt wird (Fig. 4). Dadurch wird eine Vortemperierung möglich, was zu einer Erhöhung der Temperierungsgenauigkeit und/oder zu einer erheblichen Zeitersparnis führt.

## Patentansprüche

1. Gerät zur Auswertung eines langgestreckten, flexiblen Testträgers (22) zur analytischen Bestimmung von Bestandteilen einer Körperflüssigkeit, wobei der Testträger ein in das Gerät einzuführendes Einführende (23) und ein zu seiner Handhabung dienendes Handhabungsende (25) hat, mit einer Meßeinheit (6), einer Auflagefläche (24), auf der der Testträger (22) in seiner Meßposition mindestens teilweise aufliegt und einer Positioniervorrichtung, mittels welcher der Testträger (22) dergestalt in einer Meßposition positioniert und festgehalten wird, daß sich sein Testfeld (60) in einer bestimmten Lage bezüglich der Meßeinheit (6) befindet, wobei die Positioniervorrichtung eine Halteeinrichtung (26, 28) einschließt, welche den Testträger (22) näher seinem Einführende (23) mittels eines Arretierelements (28) festhält, dadurch gekennzeichnet, daß die Positioniereinrichtung mindestens eine zweite Halteeinrichtung (38, 40) einschließt, welche den Testträger (22) näher an seinem Handhabungsende (25) mittels eines zweiten Arretierelements (38) festhält und die Positioniereinrichtung ein Spannelement (40) einschließt, durch das der Testträger (22) in seiner Meßposition entlang seiner Längsachse zwischen den Halteeinrichtungen (26, 28; 38, 40) gespannt wird.

2. Gerät nach Anspruch 1, dadurch gekennzeichnet, daß mindestens eines der Arretierungselemente (28, 38) in eine Ausnehmung (52, 53) des Testträgers (22) formschlüssig eingreift.

3. Gerät nach Anspruch 2 dadurch gekennzeichnet, daß das Spannelement ein mindestens einem der Arretierelemente (28, 38) zugeordnetes Federelement (40) ist, durch das das Arretierelement (38) unter Vorspannung in Richtung der Längsachse des Testträgers (22) von dessen Mitte wegsteht.

4. Gerät nach einem der Ansprüche 1 bis 3, dadurch gekennzeichnet, daß die dem Einführende (23) des Testträgers zugeordnete Halteeinrichtung (26, 28) ein Führungselement (32) aufweist, durch das das Einführende (23) des Testträgers (22) beim Einführen in eine bestimmte Position geführt wird und daß das Arretierelement (28) mit einem Betätigungselement (26) gekoppelt ist, welches beim Einführen des Testträgers (22) von dessen Einführende betätigbar ist.

5. Gerät nach Anspruch 4, dadurch gekennzeichnet, daß das Betätigungselement eine schwenkbare Hebeleinrichtung (26) einschließt, die zwischen zwei Endstellungen schwenkbar ist, und an die ein Federelement (30) derartig angreift, daß sie von einem zwischen beiden Endstellungen liegenden Scheitelpunkt in Richtung auf die jeweils benachbarte Endstellung federbelastet ist und die mit einer Auswerferstange (36) verbunden ist.

6. Gerät nach einem der Ansprüche 1 bis 5, dadurch gekennzeichnet, daß die Auflagefläche (24) eine bevorzugt temperierbare Andruckplatte (46) umfasst, die derartig federnd gelagert ist, daß sie vollflächig von der der Auflagefläche zugewandten Fläche her im Bereich des Testfeldes (60) gegen den in die Halteeinrichtung (26, 28; 38, 40) eingespannten Testträger (22) gedrückt wird.

7. Gerät nach einem der Ansprüche 1 bis 6, dadurch gekennzeichnet, daß die Auflagefläche (24) zumindest in ihrem dem Handhabungsende (25) des Testträgers (22) zugeordneten Bereich derartig gekrümmt ist, daß das Handhabungsende (25) des Testträgers (22) einen vorgegebenen Abstand von der Auflagefläche (24) hat, wenn der Testträger (22) nur von der seinem Einführungsende (23) zugeordneten Halteeinrichtung (26, 28) gehalten wird.

8. Gerät nach einem der Ansprüche 1 bis 7, dadurch gekennzeichnet, daß die Positioniereinrichtung in ihrer Gesamtheit mittels eines Schwenkantriebs um eine Schwenkachse (12) schwenkbar ist, wobei die Auflagefläche (24) zumindest teilweise kreisförmig um die Schwenkachse (12) gekrümmt ist und einen sich in ihrer Längsrichtung erstreckenden Schlitz (44) aufweist, der solche Abmessungen hat, daß ein gerätefest gelagerter Magnetlesekopf (42) die der Auflagefläche (24) zugewandte Oberfläche des Testträgers (22) durch den Schlitz (44) hindurch während der Schwenkbewegung kontaktieren kann.

9. Gerät nach einem der Ansprüche 1 bis 8, dadurch gekennzeichnet, daß zur Auswertung von Testträgern (22) mit einer nach Art einer Klappe an einer Befestigungskante (63) an dem Testträger befestigten Deckschicht (62) ein Blendenelement (58) mit einer Kontaktfläche (59) zum Anpressen der Deckschicht vorhanden ist, wobei das Blendenelement (58) und/oder die Positioniereinrichtung dergestalt gelagert und antreibbar ist, daß die Kontaktfläche (59) beim Anpressen der Deckschicht (62) relativ zu dem Testträger (22) eine Schwenkbewegung um eine Schwenkachse macht, die parallel zu der Befestigungskante (63) der Deckschicht (62) verläuft.

10. Gerät nach Anspruch 9, dadurch gekennzeichnet, daß das Blendenelement (58) und/oder die Positioniereinrichtung dergestalt gelagert und antreibbar ist, daß die Kontaktfläche (59) in der Annäherungsphase eine Bewegung ausführt, die ausser der Schwenkkomponente auch eine Komponente parallel zur Oberfläche des Testträgers (22) von der Befestigungskante weg hat.

11. Gerät nach Anspruch 9 oder 10 in Verbindung mit Anspruch 8, dadurch gekennzeichnet, daß das Blendenelement (58) ein im Betrieb mit der Meßeinheit (6) verbundenes Teil ist, und die Meßeinheit (6) über einen Kupplungsmechanismus geführt und vom gleichen Antrieb wie die Positioniereinrichtung antreibbar ist.

12. Gerät nach Anspruch 11, dadurch gekennzeichnet, daß der Kupplungsmechanismus zwei ineinandergreifende Zahnkränze (18) umfasst, von denen einer mit der Positioniereinrichtung und der anderen mit der Meßeinheit (6) fest verbunden ist.

13. Gerät nach einem der Ansprüche 11 bis 12, dadurch gekennzeichnet, daß der der Meßeinheit (6) zugeordnete Zahnkranz (10) einen kleineren Durchmesser als der der Positioniereinrichtung zugeordnete Zahnkranz (8) hat.

**Revendications**

1. Dispositif pour l'évaluation d'un support de test (22) ayant la forme d'un ruban flexible, pour la détermination analytique de constituants d'un liquide corporel, le support de test possédant une extrémité (23) à introduire dans l'appareil et une extrémité de manipulation (25), servant à sa manipulation, dispositif comportant une unité de mesure (6), une surface d'appui (24), sur laquelle repose, au moins en partie, le support de test (22) en position de mesure, et un dispositif de positionnement, au moyen duquel le support de test (22) est placé en position de mesure et maintenu de façon fixe de telle manière que son champ de test (60) se trouve à un endroit déterminé par rapport à l'unité de mesure (6), étant entendu que le dispositif de positionnement comporte un dispositif de maintien (26, 28) qui maintient en position fixe le support de test (22) au plus près de son extrémité (23) d'introduction dans l'appareil au moyen d'un organe de blocage (28), caractérisé en ce que le dispositif de positionnement comporte au moins un deuxième dispositif de maintien (38, 40), lequel fixe le support de test (22) au plus près de son extrémité de manipulation (25), au moyen d'un deuxième organe de blocage (38) et en ce que le dispositif de positionnement, comporte un organe de mise en tension (40) par lequel le support de test (22) est mis en tension en position de mesure suivant son axe longitudinal, entre les dispositifs de maintien (26, 28; 38, 40).

2. Dispositif suivant la revendication 1, caractérisé en ce qu'au moins un organe de blocage (28, 38) vient s'enclencher mécaniquement dans un évidement (52, 53) du support de test (22).

3. Dispositif suivant la revendication 2, caractérisé en ce que l'organe de mise en tension est constitué d'un organe à ressort (40), associé à au moins un organe de blocage (28, 38), au moyen duquel l'organe de blocage (38), sous l'effet d'une tension préalable dirigée vers l'axe longitudinal du support de test (22), recule en s'éloignant du milieu de celui-ci.

4. Dispositif suivant l'une quelconque des revendications 1 à 3, caractérisé en ce que le dispositif de maintien (26, 28) affecté à l'extrémité d'introduction (23) du support de test (22) présente un organe de guidage (32), par lequel l'extrémité d'introduction (23) du support de test (22), lors de son introduction, est guidée vers une position déterminée, et en ce que l'organe de blocage (28) est accouplé à un organe de commande (26), qui peut être actionné, lors de l'introduction du support de test (22), par l'extrémité d'introduction de celui-ci.

5. Dispositif suivant la revendication 4, caractérisé en ce que l'organe de commande comporte un dispositif à levier (26) pivotant, que l'on peut faire pivoter entre deux positions limites, et qui est attaqué par un organe à ressort (30) de telle façon qu'il est soumis à la force du ressort agissant du sommet se trouvant entre les deux positions limites, dans la direction de chacune des positions limites voisines et qu'il est relié avec une tige d'éjection (36).

6. Dispositif suivant l'une quelconque des revendications 1 à 5, caractérisé en ce que la surface d'appui (24) comporte une plaque de pressage (46), de préférence pouvant être équilibrée en température, qui est montée sur ressort de telle façon qu'elle soit appuyée, dans la zone du champ du test (60), contre le support de test (22) mis en tension dans les dispositifs de maintien (26, 28; 38, 40), sur toute sa surface tournée vers la surface d'appui.

7. Dispositif suivant l'une quelconque des revendications 1 à 6, caractérisé en ce que la surface d'appui (24), au moins dans sa partie correspondant à l'extrémité de manipulation (25) du support de test (22), est courbée de telle façon que l'extrémité de manipulation (25) du support de test (22) est à une distance prédéfinie de la surface d'appui (24), si le support de test (22) est seulement maintenu par le dispositif de maintien (26, 28) correspondant à son extrémité d'entrée (23).

8. Dispositif suivant l'une quelconque des revendications 1 à 7, caractérisé en ce que le dispositif de positionnement peut pivoter en totalité autour d'un axe de pivotement (12) au moyen d'un entraînement de pivotement, étant entendu que la surface d'appui (24) est courbée en formant un arc de cercle, au moins en partie, autour de l'axe de pivotement (12) et qu'elle présente une rainure (44) s'étendant suivant sa direction longitudinale et qui est dimensionnée de telle façon qu'une tête de lecture magnétique (42) montée solidaire de l'appareil peut, pendant le mouvement de pivotement, entrer en contact, en traversant la rainure (44), avec la surface du support de test (22) tournée vers la surface d'appui (24).

9. Dispositif suivant l'une quelconque des revendications 1 à 8, caractérisé en ce que, pour l'évaluation de supports de test (22) comportant une couche de recouvrement (62) fixée sur le support de test par une arête de fixation (63) à la façon d'un clapet, on dispose d'un organe formant diaphragme (58), comportant une surface de contact (59), pour appuyer la couche de recouvrement, étant entendu que l'organe formant diaphragme (58), et/ou le dispositif de positionnement, est monté et peut être entraîné de telle façon que la surface de contact (59), en appuyant la couche de recouvrement (62) par rapport au support de test (22), exécute un mouvement de pivotement autour d'un axe de pivotement disposé parallèlement à l'arête de fixation (63) de la couche de recouvrement (62).

10. Dispositif suivant la revendication 9, caractérisé en ce que l'organe formant diaphragme (58) et/ou le dispositif de positionnement est monté et peut être entraîné de telle façon que la surface de contact (59) exécute, dans la phase d'approche, un mouvement qui, en dehors de la composante de pivotement, a également une composante parallèle à la surface extérieure du support de test (22), s'éloignant de l'arête de fixation.

11. Dispositif suivant la revendication 9 ou la revendication 10, caractérisé en ce que l'organe en forme de diaphragme (58) est une pièce liée en fonctionnement avec l'unité de mesure (6) et en ce que l'unité de mesure (6) est guidée par l'intermédiaire d'un mécanisme d'accouplement et peut être entraînée par le même dispositif d'entraînement que le dispositif de positionnement.

12. Dispositif suivant la revendication 11, caractérisé en ce que le mécanisme d'accouplement comporte deux couronnes dentées (18) engrénant entre elles, dont l'une est reliée solidairement avec le dispositif de positionnement et l'autre avec l'unité de mesure (6).

13. Dispositif suivant la revendication 1 ou la revendication 12, caractérisé en ce que la couronne dentée (10) associée à l'unité de mesure (6) a un diamètre plus petit que la couronne dentée (8) associée au dispositif de positionnement.

**Claims**

1. Apparatus for the evaluation of a longitudinally extending, flexible test carrier (22) for the analytical determination of components of a body fluid, whereby the test carrier has an insertion end (23) to be inserted into the apparatus and a handling end (25) serving for its handling, with a measurement unit (6), a supporting surface (24) on which the test carrier (22) lies at least partly in its measurement position and a positioning device, by means of which the test carrier (22) is positioned and securely held in a measurement position in such a manner that its test field (60) is present in a definite position with regard to the measurement unit (6), whereby the positioning device includes a holding means (26, 28) which securely holds the test carrier (22) near its insertion end (23) by means of an arresting element (28), characterised in that the positioning device includes at least a second holding means (38, 40) which firmly holds the test carrier (22) close to its handling end (25) by means of a second arresting element (38) and the positioning device includes a tensioning element (40) by means of which the test carrier (22) is tensioned in its measurement position along its longitudinal axis between the holding means (26, 28; 38, 40).

2. Apparatus according to claim 1, characterised in that at least one of the arresting elements (23, 38) engages form-lockingly in a recess (52, 53) of the test carrier (22).

3. Apparatus according to claim 2, characterised in that the tensioning element is a spring element (40) associated with at least one of the arresting elements (28, 38) by means of which the arresting element (38) is prestressed in the direction of the longitudinal axis of the test carrier (22) from its middle.

4. Apparatus according to one of claims 1 to 3, characterised in that the holding means (26, 28) associated with the insertion end (23) of the test carrier has a guiding element (32) by means of which the insertion end (23) of the test carrier (22), in the case of insertion, is guided into a definite position and that the arresting element (28) is coupled with an operating element (26) which, in the case of insertion of the test carrier (22), is operable by its insertion end.

5. Apparatus according to claim 4, characterised in that the operating element includes a tiltable lever device (26) which is tiltable between two end positions and engages with a spring element (30) in such a manner that it is springloaded from an apex lying between the two end positions in the direction towards the particular adjacent end position and which is connected with an ejection rod (36).

6. Apparatus according to any one of claims 1 to 5, characterised in that the supporting surface (24) includes a preferably temperable pressure plate (46) which is spring mounted in such a manner that it is full-facedly pressed by the surface facing the supporting surface in the region of the test field (60) against the test carrier (22) gripped in the holding means (26, 28; 38, 40).

7. Apparatus according to one of claims 1 to 6, characterised in that the supporting surface (24) is, at least in its region associated with the handling end (25) of the test carrier (22), curved in such a manner that the handling end (25) of the test carrier (22) has a predetermined distance from the supporting surface (24) when the test carrier (22) is only held by the holding means (26, 28) associated with its insertion end (23).

8. Apparatus according to one of claims 1 to 7, characterised in that the positioning device is, in its totality, tiltable by means of a tilting drive about a tilting axis (12), whereby the supporting surface (24) is curved at least partly circularly about the tilting axis (12) and has a slot (44) extending in its longitudinal direction which has dimensions such that a magnetic reading head (42) securely mounted on the apparatus can contact the surface of the test carrier (22) facing the supporting surface (24) through the slot (44) during the tilting movement.

9. Apparatus according to one of claims 1 to 8, characterised in that, for the evaluation of test carriers (22) with a covering layer (62) fixed in the manner of a flap on one fixing edge (63) on the test carrier, a diaphragm element (58) is present with a contact surface (59) for the pressing on of the covering layer, whereby the cover plate element (58) and/or the positioning device is mounted and operable in such a manner that the contact surface (59), in the case of the pressing on of the covering layer (62), makes, relative to the test carrier (22), a tilting movement about a tilting axis which runs parallel to the fixing edge (63) of the covering layer (62).

10. Apparatus according to claim 9, characterised in that the diaphragm element (58) and/or the positioning device is mounted and operable in such a manner that the contact surface (59) performs, in the approaching phase, a movement which, apart from the tilting components, also has a component parallel to the surface of the test carrier (22) away from the fixing edge.

11. Apparatus according to claim 9 or 10 in combination with claim 8, characterised in that the diaphragm element (58) is, in operation, a part connected with the measurement unit (6) and the measurement unit (6), is guided via a coupling mechanism and is drivable by the same drive as the positioning device.

12. Apparatus according to claim 11, characterised in that the coupling mechanism includes two interengaging toothed rims (18) one of which is securely attached with the positioning device and the other with the measurement unit (6).

13. Apparatus according to one of claims 11 or 12, characterised in that the toothed rim (10) associated with the measurement unit (6) has a smaller diameter than the toothed rim associated with the positioning device.

Fig. 1

Fig.2

2

Fig.3

Fig.4

4

Fig. 5a

Fig. 5b

Fig. 5c

Fig. 6